# EUROPÄISCHE PATENTSCHRIFT

(11) **EP 1 290 665 B1**
(45) Veröffentlichungstag und Bekanntmachung des Hinweises auf die Patenterteilung: **18.02.2004**
(21) Anmeldenummer: 00987077.5
(22) Anmeldetag: 04.11.2000
(51) Int. Cl.: G08G 1/0969

(54) **VERFAHREN ZUM BETRIEB EINES NAVIGATIONSSYSTEMS**
METHOD FOR OPERATING A NAVIGATION SYSTEM
PROCEDE D'EXPLOITATION D'UN SYSTEME DE NAVIGATION

(30) Priorität: 30.12.1999 DE 19963765
(43) Veröffentlichungstag der Anmeldung: 12.03.2003
(73) Patentinhaber: ROBERT BOSCH GMBH, 70442 Stuttgart (DE)
(72) Erfinder: WINTER, Stephan, 30159 Hannover (DE); HESSING, Bernd, 31188 Holle (DE); JUNG, Thomas, 60314 Frankfurt (DE); NORDSIEK, Walter, 31188 Holle (DE); BINNEWIES, Olaf, 31134 Hildesheim (DE); FABIAN, Thomas, 31139 Hildesheim (DE); RENTEL, Bettina, 31180 Giesen (DE); OTTE, Dirk, 30880 Laatzen (DE); TIEMANN, Dirk, 30657 Hannover (DE)
(86) Internationale Anmeldenummer: PCT/DE2000/003877
(87) Internationale Veröffentlichungsnummer: WO 2001/050437

(56) Entgegenhaltungen:
- EP-A- 0 838 764
- EP-A- 0 935 227
- EP-A- 0 947 850
- US-A- 5 699 255

## Beschreibung

### Technisches Gebiet

Die Erfindung betrifft ein Verfahren zum Betrieb eines Navigationssystems mit einer digitalen Kartenbasis, welche ein Abbild von realen geographischen Bereichen ist und Daten von geographischen Elementen enthält, sowie mit einem die Daten abrufenden und verarbeitenden Gerät, wie ein Bedienteil mit Anzeigeeinrichtung, gemäß dem Oberbegriff des Anspruchs 1. Die Erfindung betrifft ferner ein Navigationssystem für ein Fortbewegungsmittel, insbesondere für ein Kraftfahrzeug, mit einem Daten einer digitalen Kartenbasis zu Verfügung stellenden Gerät und einem mit diesem verbundenen Daten abrufenden und verarbeitenden Gerät, gemäß dem Oberbegriff des Anspruchs 6.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher an einen gewünschten Zielort, ohne dass vorher aufwendig eine Route geplant und entsprechendes Kartenmaterial erworben bzw. studiert werden muss. Hierzu liegen entsprechende, beispielsweise auf Karten, Landkarten oder Straßenkarten basierende, Navigationsdaten in dem Navigationssystem beispielsweise auf CD-ROM als digitale Kartenbasis gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei beispielsweise Daten über Straßen und Wege für Kraftfahrzeuge sowie weitergehende geographische Informationen, wie beispielsweise Berge, Seen, Wälder, Bebauung oder sonstige topographische Elemente, oder weitergehende Informationen, wie Restaurants, Hoteis, Sehenswürdigkeiten oder sonstige Informationen.

Hierbei ist die digitale Kartenbasis im wesentlichen ein Abbild des realen Straßennetzes sowie der entsprechenden geographischen Umgebung. Diese Informationen aus der digitalen Kartenbasis werden an einem Bedienteil zur Information des Fahrers auf einem Display angezeigt, wobei zur Erhaltung der Übersichtlichkeit der Darstellung in unterschiedlichen Situationen der Detailgrad bzw. die Anzahl der dargestellten geographischen Merkmale unterschiedlich zu wählen ist. So werden beispielsweise auf einer Übersichtskarte nur Autobahnen dargestellt, während eine Innenstadtkarte Details bis zur Wohnbebauung enthalten soll. Diese Wahl der dargestellten Details der Karte beeinflusst ganz wesentlich die Übersichtlichkeit und Lesbarkeit von auf der Grundlage der digitalen Kartenbasis dargestellten Karten, was besonders bei Darstellungen in Fahrzeugen wichtig ist, da ein Fahrer mit möglichst einem Blick alle notwendigen Informationen für die Routenführung erfassen können soll. Hierbei können die Kartendarstellungen sinnvoll nicht nach allgemein festgelegten Regeln erstellt werden, sondern es ist eine relative Wichtung der Darstellungselemente notwendig. Beispielsweise darf eine Übersichtskarte des Ruhrgebietes Sinnvollerweise nicht alle Autobahnen enthalten. Eine Karte mit dem gleichen Maßstab in Arizona könnte demgegenüber durchaus sehr kleine Straßen Sinnvollerweise enthalten.

Bei Navigationssystemen für Kraftfahrzeuge ist es sinnvoll, das Navigationsmodul, weiches die digitale Kartenbasis zur Verfügung stellt, von den darstellenden Geräten zu trennen und auch getrennt voneinander zu entwickeln. Hierbei ist dann eine vordefinierte Schnittstelle zum Zugriff auf die digitale Kartenbasis des Navigationsmoduls notwendig. Diese Schnittstelle muss es ermöglichen im darstellenden Gerät in unterschiedlichen Maßstäben digitale Karten mit guter Übersichtlichkeit zu erstellen.

Derartige Schnittstellen sind beispielsweise von den Firmen NAVTECH (http://www.navtech.com) oder Etak Inc. (http://www.etak.com) bekannt. Diese Schnittstellen ermöglichen einen Zugriff auf das physikalische Speicherformat der digitalen Kartenbasis. In unterschiedlichen Fahrzeugen werden allerdings unterschiedliche digitale Kartenbasen eingesetzt. Außerdem kann es beim Zugriff durch das Navigationsmodul, beispielsweise für interne Routenberechnung, und Bedienteilrechner, beispielsweise zur Erzeugung einer Darstellung eines Ausschnitts der digitalen Kartenbasis auf dem Anzeigegerät, zu Zugriffskonflikten, durch konkurrierenden Zugriff unterschiedlicher Programme auf einen sequentiell auslesbaren Datenspeicher (CD-ROM, DVD-ROM), kommen. Weiterhin sind in den digitalen Kartenbasen die enthaltenen Elemente "direkt" beschrieben, d.h. eine Autobahn ist eine Straße der Klasse "Motorway" mit einer Nummer. Es hat sich gezeigt, dass eine Standardisierung und Einigung über die Klassifizierung von Kartenelementen nur auf einem sehr unbefriedigenden, für eine Darstellungserzeugung nicht tauglichen Niveau möglich ist.

Die Bereitstellung der Daten für die Darstellung auf dem Anzeigegerät am Bedienteil eines Navigationssystems erfolgt häufig in Form von geographisch definierten Kacheln. Aus einzelnen Kacheln einer digitalen Karte wird dabei ein Kachelnetz zusammengesetzt. Das Kachelnetz wird dadurch gebildet, dass die Erdoberfläche für die Karte in ein Netz von Kacheln gleicher geographischer Ausdehnung eingeteilt wird, vergleichbar mit den Planquadraten einer herkömmlich gedruckten Karte. Um unterschiedliche Detaillierungen zu ermöglichen, werden üblicherweise mehrere Kachelnetze auf einer digitalen Karte abgelegt. Eine grobe Kartendarstellung in einem Übersichtsnetz ergibt sich mit wenigen jeweils geographisch groß ausgedehnten Kacheln. Diese erhalten dann nur für eine grobe Orientierung bedeutsame geographische Informationen. Ein Detailnetz dagegen umfasst viele räumlich kleine Kacheln und ist dem Übersichtsnetz überlagert. In den Kacheln des Detailnetzes sind beispielsweise auch Wohnstraßen und andere nur im Nahbereich interessante geographische Informationen enthalten. An einer geographischen Position können daher in der digitalen Kartenbasis Kacheln unterschiedlicher Ausdehnung und unterschiedlichen Inhalts vorhanden sein. Diese sich gegenseitig überlagernden Netze aus Kacheln werden auch als unterschiedliche Kachelebenen bezeichnet. Um bestimmte Informationen zu erhalten, muss der Nutzer bzw. das Bedienteil aus der digitalen Karte eine Kachel aus derjenigen Kachelebene anfordern, deren Detaillierungsgrad er wünscht.

Das Bedienteil ruft eine Kachel ab und stellt diese auf dem Anzeigegerät dar. Ferner werden die in der Kachel enthaltenen Informationen zur Routenberechnung verwendet. Dies hat einerseits den Vorteil, dass eine einfache Bestimmung der aus der digitalen Kartenbasis anzufordernden Daten realisiert ist, indem einfach eine Kachel aufgerufen wird und alle in dieser Kachel enthaltene Daten über geographische Elemente übertragen werden. Ferner wird eine Entkopplung von Bildschirmausschnitt und Datenhaltung erzielt. Andererseits ist es jedoch ein erheblicher Nachteil der Kacheln, dass ggf. interessante Daten oder Informationen außerhalb der jeweiligen Kachel bzw. am Kachelrand nicht zur Verfügung stehen, da diese mittels sogen. "Clippen" abgeschnitten und nicht mitübertragen werden. Ferner müssen Daten an Kachelrändern zur Routenberechnung ggf. berechnet werden. Darüber hinaus hat das Bedienteil keinerlei Informationen darüber was in welchen Kacheln gespeichert ist und kann somit nicht gezielt Daten aus der digitalen Kartenbasis abrufen.

### Darstellung der Erfindung, Aufgabe, Lösung, Vorteile

Es ist Aufgabe der vorliegenden Erfindung, ein verbessertes Verfahren der obengenannten Art zur Verfügung zu stellen, welches die obengenannten Nachteile beseitigt und einen verbesserten und gezielteren Zugriff auf Daten einer digitalen Kartenbasis zur Verfügung stellt.

Diese Aufgabe wird durch ein Verfahren der o.g. Art mit den in Anspruch 1 gekennzeichneten Merkmalen und durch ein Navigationssystem der o.g. Art mit den in Anspruch 6 gekennzeichneten Merkmalen gelöst.

Dazu ist es bei einem Verfahren der o.g. Art erfindungsgemäß vorgesehen, dass dem Daten abrufenden und verarbeitenden Gerät ein Datenverzeichnis der in der digitalen Kartenbasis vorhandenen Daten übertragen wird und das Daten abrufende und verarbeitende Gerät mittels dieses Datenverzeichnisses aus der digitalen Kartenbasis anzufordernde Daten auswählt.

Dies hat den Vorteil, dass die Anwendung im Daten abrufenden und verarbeitenden Gerät von der physikalischen Datenablage entkoppelt ist. Ferner kann das Daten abrufende und verarbeitende Gerät gezielt Daten aus der digitalen Kartenbasis abrufen, ohne dabei auf blockweise oder kachelartige Zusammenfassungen der Daten in der digitalen Kartenbasis beschränkt zu sein.

Vorteilhafte Weiterbildungen des Verfahrens sind in den Ansprüchen 2 bis 5 beschrieben.

Beispielsweise sind die Daten in der digitalen Kartenbasis in Form von geographisch definierten Kacheln zusammen gefasst und an das Daten abrufende und verarbeitende Gerät wird ein Datenverzeichnis bzgl. Inhalte von einzelnen Kachelebenen übertragen.

Zweckmäßigerweise werden mit dem Datenverzeichnis Informationen bzgl. in der digitalen Kartenbasis enthaltenen Straßenklassen, Ortsgrößen, Eisenbahnlinien, Bauten, Brücken etc. und/oder bzgl. in der digitalen Kartenbasis enthaltenen unterschiedlichen Codiervorschriften übertragen. Optional werden Codierungen von Verkehrsinformationen, wie GATS-Geocodes oder TMC-Location-Codes, übertragen.

Besonders Vorteilhaft ist das Verfahren dann, wenn die digitale Kartenbasis verschiedene Ebenen aufweist, welche jeweils unterschiedlich detaillierte Dateninhalte desselben geographischen Gebietes aufweisen, wobei mit dem Datenverzeichnis die verschiedenen Informationsinhalte der verschiedenen Ebenen übertragen werden.

Ferner ist es bei einem Navigationssystem der o.g. Art erfindungsgemäß vorgesehen, dass das Daten der digitalen Kartenbasis zu Verfügu ng stellende Gerät derart ausgebildet ist, dass es dem Daten abrufenden und verarbeitenden Gerät ein Datenverzeichnis der in der digitalen Kartenbasis enthaltenen Daten zur Verfügung stellt, wobei das Daten abrufende und verarbeitende Gerät derart ausgebildet ist, dass es mittels des Datenverzeichnisses aus der digitalen Kartenbasis an das Daten abrufende und verarbeitende Gerät zu übertragene Daten auswählt.

Dies hat den Vorteil, dass die Anwendung im Daten abrufenden und verarbeitenden Gerät von der physikalischen Datenablage entkoppelt ist.

Ferner kann das Daten abrufende und verarbeitende Gerät gezielt Daten aus der digitalen Kartenbasis abrufen, ohne dabei auf blockweise oder kachelartige Zusammenfassungen der Daten in der digitalen Kartenbasis beschränkt zu sein.

Vorteilhafte Weiterbildungen des Navigationssystems sind in den Ansprüchen 7 bis 9 beschrieben.

Hierbei ist beispielsweise das Daten der digitalen Kartenbasis zu Verfügung stellenden Gerät ein Navigationsmodul und das Daten abrufende und verarbeitende Gerät ein Bediengerät.

Alternativ ist beispielsweise das Daten der digitalen Kartenbasis zu Verfügung stellenden Gerät ein Datenserver eines telematischen Dienstleiters und das Daten abrufende und verarbeitende Gerät das Fortbewegungsmittel.

in einer bevorzugten Ausführungsform weist die digitale Kartenbasis verschiedene Ebenen auf, welche jeweils unterschiedlich detaillierte Dateninhalte desselben geographischen Gebietes aufweisen, wobei unterschiedliche Informationsinhalte der unterschiedlichen Ebenen in dem Datenverzeichnis enthalten sind.

### Kurze Beschreibung der Zeichnungen

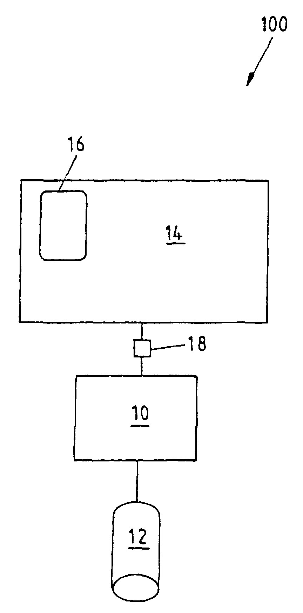

Nachstehend wird die Erfindung anhand der beigefügten Zeichnung näher erläutert. Diese zeigt in der einzigen Fig. ein Blockschaltbild eines Teils eines Navigationssystems.

### Bester Weg zur Ausführung der Erfindung

Das in der einzigen Fig. beispielhaft dargestellte Navigationssystem 100 umfasst ein Navigationsmodul 10 mit einer digitalen Kartenbasis 12, und ein Bedienteil 14 mit einem Anzeigegerät 16, wie beispielsweise einem LCD-Flachbildschirm. Zwischen Bedienteil 14 und Navigationsmodul 10 ist eine Schnittstelle 18 angeordnet.

Der Datenlieferant in Form des Navigationsmoduls 10 stellt eine Dienstleistung "Datenverzeichnis" zur Verfügung. In dem Datenverzeichnis werden alle durch die Datenbank 12 verfügbaren Dateninhalte mit den zugehörigen Verfahren aufgeführt. Bei einem Zugriff über Kacheln werden die unterschiedlichen Inhalte von einzelnen "Kachelebenen" durch den Verzeichnisdienst bekannt gemacht. Das anfordernde Gerät in Form des Bedienteiles 14 kann dann aufgrund eigener willkürlicher Kriterien Kacheln der unterschiedlichen Ebenen anfordern. Anwendungen im Bedienteil 14 und die physikalische Datenablage in der digitalen Kartenbasis 12 sind voneinander entkoppelt.

Das Inhaltsverzeichnis bzw. Datenverzeichnis enthält beispielsweise die in der digitalen Kartenbasis 12 vorhandenen Straßenklassen, Ortsgrößen, Eisenbahnlinien, Bauten, Brücken usw. Es werden einfache und weitgehend standardisierte Kodierungen für die Datenelemente verwendet.

Mit anderen Worten stellt das Navigationsmodul 10 dem Bedienteil 14 Informationen bezüglich der in der digitalen Kartenbasis 12 vorhandenen Dateninhalte zur Verfügung. Hierbei können in der digitalen Karte 12 auch mehrere voneinander unabhängige Datenbereiche vorhanden sein. Diese Datenbereiche sind zweckmäßigerweise semantisch miteinander verbunden, d.h. Daten in unterschiedlichen Datenbereichen sind über beschreibende Merkmale identisch. Beispielsweise werden dieselben Verfahren zur Kodierung der geographischen Positionen verwendet. Ferner kommen beispielsweise identische Zeichensätze und gleiche Regeln, wie sie zur Kodierung von Straßennummern verwendet werden, zur Anwendung.

Diese erfindungsgemäße Schnittstelle 18 ist nicht nur, wie beispielhaft dargestellt, zwischen dem Bedienteil 14 und dem Navigationsmodul 10 möglich, sondern kann auch zwischen einem Fahrzeug selbst und einem telematischen Dienstleister angewendet werden. Zugriffe auf die digitale Datenbasis 12 müssen nicht zeitlich in einem bestimmten Zusammenhang durchgeführt werden.

Inhaltsverzeichnisse können redundant ausgeführt werden. Wenn mehrere konkurrierende Kodierungsvorschriften vorhanden sind, dann wird zweckmäßigerweise jede unterstützte Kodiervorschrift im Inhaltsverzeichnis bekannt gemacht. Beispiele für Kodierungen von Verkehrsinformationen sind GATS-Geocodes oderTMC-Location Codes (ENV 12313-1).

## Patentansprüche

1. Verfahren zum Betrieb eines Navigationssystems mit einer digitalen Kartenbasis, welche ein Abbild von realen geographischen Bereichen ist und Daten von geographischen Elementen enthält, sowie mit einem die Daten abrufenden und verarbeitenden Gerät, wie ein Bedienteil mit Anzeigeeinrichtung,
**dadurch gekennzeichnet, dass**
dem Daten abrufenden und verarbeitenden Gerät ein Datenverzeichnis der in der digitalen Kartenbasis vorhandenen Daten übertragen wird und das Daten abrufende und verarbeitende Gerät mittels dieses Datenverzeichnisses aus der digitalen Kartenbasis anzufordernde Daten auswählt.

2. Verfahren nach Anspruch 1,
**dadurch gekennzeichnet, dass**
die Daten in der digitalen Kartenbasis in Form von geographisch definierten Kacheln zusammen gefasst sind und an das Daten abrufende und verarbeitende Gerät ein Datenverzeichnis bzgl. Inhalte von einzelnen Kachelebenen übertragen wird.

3. Verfahren nach Anspruch 1 oder 2,
**dadurch gekennzeichnet, dass**
mit dem Datenverzeichnis Informationen bzgl. in der digitalen Kartenbasis enthaltenen Straßenklassen, Ortsgrößen, Eisenbahnlinien, Bauten, Brücken etc. übertragen werden.

4. Verfahren nach einem der vorhergehenden Ansprüche,
**dadurch gekennzeichnet, dass**
mit dem Datenverzeichnis Informationen bzgl. in der digitalen Kartenbasis enthaltenen unterschiedlichen Codiervorschriften, wie GATS-Geocodes oder TMC-Location-Codes, übertragen werden.

5. Verfahren nach einem der vorhergehenden Ansprüche,
**dadurch gekennzeichnet, dass**
die digitale Kartenbasis verschiedene Ebenen aufweist, welche jeweils unterschiedlich detaillierte Dateninhalte desselben geographischen Gebietes aufweisen, wobei mit dem Datenverzeichnis die verschiedenen Informationsinhalte der verschiedenen Ebenen übertragen werden.

6. Navigationssystem (100) für ein Fortbewegungsmittel, insbesondere für ein Kraftfahrzeug, mit einem Daten einer digitalen Kartenbasis (12) zu Verfügung stellenden Gerät (10) und einem mit diesem verbundenen Daten abrufenden und verarbeitenden Gerät (14), insbesondere zum Ausführen eines Verfahrens gemäß einem der vorhergehenden Ansprüche,
**dadurch gekennzeichnet, dass**
das Daten der digitalen Kartenbasis zu Verfügung stellende Gerät (10) derart ausgebildet ist, dass es dem Daten abrufenden und verarbeitenden Gerät (14) ein Datenverzeichnis der in der digitalen Kartenbasis (12) enthaltenen Daten zur Verfügung stellt, wobei das Daten abrufende und verarbeitende Gerät (14) derart ausgebildet ist, dass es mittels des Datenverzeichnisses aus der digitalen Kartenbasis (12) an das Daten abrufende und verarbeitende Gerät (14) zu übertragene Daten auswählt.

7. Navigationssystem (100) nach Anspruch 6,
**dadurch gekennzeichnet, dass**
das Daten der digitalen Kartenbasis zu Verfügung stellenden Gerät ein Navigationsmodul (10) und das Daten abrufende und verarbeitende Gerät ein Bediengerät (14) ist.

8. Navigationssystem nach Anspruch 6,
**dadurch gekennzeichnet, dass**
das Daten der digitalen Kartenbasis (12) zu Verfügung stellenden Gerät ein Datenserver eines telematischen Dienstleiters und das Daten abrufende und verarbeitende Gerät das Fortbewegungsmittel ist.

9. Navigationssystem nach einem der Ansprüche 6 bis 8,
**dadurch gekennzeichnet, dass**
die digitale Kartenbasis (12) verschiedene Ebenen aufweist, welche jeweils unterschiedlich detaillierte Dateninhalte desselben geographischen Gebietes aufweisen, wobei unterschiedliche Informationsinhalte der unterschiedlichen Ebenen in dem Datenverzeichnis enthalten sind.

## Claims

1. Method for operating a navigation system with a digital map base which is a representation of real geographic areas and contains data relating to geographic elements, as well as having a device which retrieves and processes the data, such as an operator control part with a display device, **characterized in that** a data record of the data present in the digital map base is transmitted to the device which retrieves and processes the data, and the device which retrieves and processes the data uses this data record to select data which is to be requested from the digital map base.

2. Method according to Claim 1, **characterized in that** the data in the digital map base is combined in the form of geographically defined tiles and a data record relating to the contents of individual tile planes being transmitted to the device which retrieves and processes data.

3. Method according to Claim 1 or 2, **characterized in that** information relating to road classes, sizes of localities, railway lines, buildings, bridges etc. contained in the digital map base are transmitted with the data record.

4. Method according to the preceding claims, **characterized in that** information relating to different coding rules, such as GATS Geocodes or TMC location codes, which are contained in the digital map base are transmitted with the data record.

5. Method according to one of the preceding claims, **characterized in that** the digital map base has different planes which each have differently detailed data contents relating to the same geographic region, the various information contents of the various planes being transmitted with the data record.

6. Navigation system (100) for a means of locomotion, in particular for a motor vehicle, having a device (10) which makes available data of a digital map base (12), and a device (14) which is connected to said device (10) and retrieves and processes data, in particular for the purpose of carrying out a method according to one of the preceding claims, **characterized in that** the device (10) which makes available data of the digital map base is embodied in such a way that it makes available, to the device (14) which retrieves and processes data, a data record of the data contained in the digital map base (12), the device (14) which retrieves and processes data being embodied in such a way that it uses the data record to select, from the digital map base (12), data which is to be transmitted to the device (14) which retrieves and processes data.

7. Navigation system (100) according to Claim 6, **characterized in that** the device which makes available data of the digital map base is a navigation module (10), and the device which retrieves and processes data is an operator control device (14).

8. Navigation system according to Claim 6, **characterized in that** the device which makes available data of the digital map base (12) is a data server of a telematic service provider and the device which retrieves and processes data is the means of locomotion.

9. Navigation system according to one of Claims 6 to 8, **characterized in that** the digital map base (12) has various planes which each have differently detailed data contents relating to the same geographic region, different information contents of the different planes being contained in the data record.

## Revendications

1. Procédé d'exploitation d'un système de navigation avec une base de carte numérique qui représente des zones géographiques réelles et contient des données d'éléments géographiques ainsi qu'un appareil recherchant et traitant les données comme un organe de commande avec un dispositif d'affichage,
**caractérisé en ce qu'**
on transmet à l'appareil de recherche et de traitement des données une liste de données contenant les données contenues dans la base de carte numérique et l'appareil recherchant et traitant les données choisit les données à partir de la base de carte numérique au moyen de cette liste.

2. Procédé selon la revendication 1,
**caractérisé en ce que**
les données dans la base de carte numérique sont regroupées sous la forme de carreaux définis géométriquement et on transmet à l'appareil recherchant et traitant les données une liste de données regroupant le contenu de chaque plan de carreau.

3. Procédé selon l'une des revendications 1 ou 2,
**caractérisé en ce qu'**
à l'aide de la liste de données on transmet des informations contenues dans la base de carte numérique telles que les classes de rues, la taille des emplacements, les lignes de chemins de fer, les constructions, les ponts, etc....

4. Procédé selon l'une des revendications précédentes,
**caractérisé en ce qu'**
on transmet avec la liste de données des informations des différentes règles de codage contenues dans la base de carte numérique comme des codes GATS ou des codes TMC.

5. Procédé selon l'une des revendications précédentes,
**caractérisé en ce que**
la base de carte de données présente différents plans qui contiennent à chaque fois des données détaillées différemment de la même zone géographique, les différents contenus d'informations de chacun des différents plans étant transmis au moyen de la liste de données.

6. Système de navigation (100) pour un moyen de déplacement, en particulier pour un véhicule avec un appareil (10) mettant à disposition les données d'une base de carte (12) numérique et un appareil (14) relié à celui-ci recherchant et traitant les données, en particulier pour la mise en oeuvre d'un procédé selon une des revendications précédentes,
**caractérisé en ce que**
l'appareil (10) mettant à disposition les données de la base de carte numérique est réalisé de la sorte qu'il mette à disposition de l'appareil (14) pour la recherche et le traitement des données, une liste de données des données contenues dans la base de carte (12) numérique, l'appareil (14) recherchant et traitant les données étant réalisé de sorte qu'il choisisse, au moyen de la liste de données, à partir de la base de carte (12), les données à transmettre à l'appareil de recherche et de traitement des données (14).

7. Système de navigation (100) selon la revendication 6,
**caractérisé en ce que**
l'appareil mettant à disposition les données de la base de carte numérique est un module de navigation (10) et que l'appareil recherchant et traitant les données est un appareil de service (14).

8. Système de navigation selon la revendication 6,
**caractérisé en ce que**
l'appareil mettant à disposition les données de la base de carte numérique (12) est un serveur de données d'un prestataire télématique et l'appareil recherchant et traitant les données est le moyen de locomotion.

9. Système de navigation selon l'une des revendications 6 à 8,
**caractérisé en ce que**
la base de carte numérique (12) présente différents plans qui présentent à chaque fois des données différemment détaillées de la même zone géographique, les différentes informations des différents plans étant contenues dans la liste de données.
